# EUROPÄISCHE PATENTANMELDUNG

(11) **EP 1 632 823 A2**
(43) Veröffentlichungstag der Anmeldung: **08.03.2006**
(21) Anmeldenummer: 05018925.7
(22) Anmeldetag: 31.08.2005
(51) Int. Cl.: G04G 7/02, G04G 15/00, G04G 9/00

(54) **Astronomische Schaltuhr mit automatischer Parametrierung**

(30) Priorität: 01.09.2004 DE 102004042200
(71) Anmelder: Legrand-BTicino GmbH, 59494 Soest (DE)
(72) Erfinder: Mauz, Erwin, 59505 Bad Sassendorf (DE)
(74) Vertreter: Hanewinkel, Lorenz

(57) **Zusammenfassung**

Astronomische Schaltuhr (1) zum Ein- und Ausschalten von Verbrauchern in jeweils vorgegebener zeitlicher Relation zu einer ortsbezogenen Position mindestens eines ausgewählten Gestims, wie Sonne und/oder Mond, wobei aus von Satelliten empfangenen Zeit-, Satelliten- und Ortsinfomlationen eine geografische Empfängerposition und periodisch eine Uhrzeit ermittelt werden, womit in der Schaltuhr (1) eine mit einem internen Zeitgeber (13) gesteuerte Uhr synchronisiert und eine mittlere Ortszeit und die Position des ausgewählten Gestirns errechnet wird, wobei in der Schaltuhr (1) ein Empfänger enthalten ist, der mindestens einmal täglich Zeit- und Ortsinformationen von nur einem sich mit großer Bahnneigung in einem niedrigen Orbit bewegenden Satelliten aufnimmt und die Schaltuhr (1) aus diesen Informationen den Empfängerstandort mit einer Auflösung kleiner als 0,5 Grad Länge und Breite bestimmt und die Uhr so synchronisiert, dass sie eine Langzeittoleranz von höchstens +/- 0,5 s aufweist.

## Beschreibung

Astronomische Schaltuhr zum Ein- und Ausschalten von Verbrauchern in jeweils vorgegebener zeitlicher Relation zu einer ortsbezogenen Position mindestens eines ausgewählten Gestirns, wie Sonne und/oder Mond, wobei aus von Satelliten empfangenen Zeit-, Satelliten- und Ortsinformationen eine geografische Empfängerposition und periodisch eine Uhrzeit ermittelt werden, womit in der Schaltuhr eine mit einem internen Zeitgeber gesteuerte Uhr synchronisiert und eine mittlere Ortszeit und die Position des ausgewählten Gestirns errechnet wird.

Derartige Schaltuhranlagen sind aus der KR 2003-0073002A (mit Abstract des KR-Patentamts und WPI Abstract sowie aus der JP 10-159465-A (mit Abstract und Online-Übersetzung des JP-Patentamts) bekannt. Hicrbei wird ein GPS-Empfänger, der die Signale mehrerer Satelliten empfängt und aus diesen die Empfärtger-Ortskoordinaten ermittelt, die über einen Datenbus an die Schaltuhr geleitet werden, an einem Gebäude installiert, in dem sich die Schaltuhr befindet, was ein erheblicher Installationsaufwand ist.

Weiterhin ist aus der DE 101 51 796 A1 eine Schaltvorrichtung zum Ein- und Ausschalten einer Kraftfahrzeugbeleuchtung bekannt, wobei ein separater GPS-Bmpfänger im Fahrzeug angeordnet ist und dessen Empfangsinformation einer Auswerteeinheit zugeführt wird, in der mittels karthografischer Daten und eines Kennfeldes aus Orts- und Zeitangaben der Sonnenstand ermittelt und aufgrund eines Schaltkriteriums die Leuchten ein- oder ausgeschaltet werden.

Weiterhin sind aus HTLBERG.W. (Hrsg.): Funkuhrtechnik, München [u. a.]: Oldenbourg, 1988, S. 235 bis 245 ISBN: 3-486-20623-0, ein GPS-System bekannt, das damals mit sieben Satelliten arbeitete, die mit einer Inklination von 55° die Erde in großer Höhe umkreisten und mit Frequenzen von 1575 MHz und 1227 MHz Orts- und Zeitinformationen aussenden, aus denen abhängig von der Zahl der jeweils sichtbaren Satelliten ein Empfängerstandort und damit eine mittlere Ortszeit mit mehr oder weniger großer Genauigkeit bestimmt werden kann, wobei für eine Ortsbestimmung in der Ebene mindestens drei Satelliten gleichzeitig sichtbar sein müssen. Die benutzten Frequenzen erlauben jedoch einen Empfang nur bei ausreichender Sichtbarkeit der Satelliten und nicht in einem Gebäude in einer Installationszentrale, was eine aufwendige Installation erfordert.

Weiterhin ist aus der DE 3019 279 C2 eine Funkschaltuhr bekannt, die in Abhängigkeit der Stellung von Gestirnen Schaltungen ausführen kann. Die Uhr benötigt dazu Informationen über die aktuelle amtliche Uhrzeit, das aktuelle Datum und die geographischen Standort-Koordinaten. Die Zeit- und Datumsinformationen erhält die Uhr per Funk über den Empfang des Zeitzeichensenders DCF-77. Die geographischen Koordinaten des Standorts müssen in die Uhr manuell eingegeben werden. Die Uhr errechnet auf Basis dieser Daten beispielsweise die amtliche Zeit des Sonnenauf- oder - untergangs und führt entsprechende Schaltaktionen aus. Die Eingabe des Standorts in Form der geographischen Koordinaten, der zugehörigen Zeitzone und des gewünschten Sommerzeitumschaltdatums führt bei den Anwendern dieser Uhren immer wieder zu Problemen, da diese Daten den meisten Menschen nicht geläufig sind. Diesem Problem wird in der Regel dadurch begegnet, dass solchen Uhren bei der Auslieferung eine Weltkarte mit entsprechendem Koordinatengitternetz und Zeitzoneneinteilung zur Groborientierung beigefügt wird. Die geographischen Koordinaten werden in der Regel gerundet mit einer Auflösung von einem Winkelgrad entsprechend dem Koordinatengittemetz der Erde eingegeben, auf die Eingabe von Winkelminuten und Winkelsekunden wird aus Gründen der Vereinfachung verzichtet.
Durch die Rundung der Ortskoordinaten ergibt sich der Nachteil, dass nur Schaltuhren deren Standort genau dem Schnittpunkt eines Längengrad und eines Breitengrad entsprechen, exacte Sonnenaufgangszeiten und Sonnenuntergangszeiten berechnen.
Die Überwiegende Anzahl der Schaltuhren wird jedoch an Standorten eingesetzt, die nicht identisch mit dem Schnittpunkt eines Längengrad und eines Breitengrad sind. Alle Schaltuhren, deren tatsächliche Standorte nicht auf einem Schnittpunkt des Koordinatengradnctzcs aber innerhalb einer Regionalzone liegen, welche eine Ausdehnung von Längengrad +/- 0,5 Grad und Breitengrad +/- 0,5 Grad hat, berechnen demzufolge bezogen auf ihren tatsächlichen Standort aufgrund der Koordinatenrundung ungenaue Auf-/Untergangszeiten, wobei die Ungenauigkeit zum Rand der so definierten Regionalzonen hin zunimmt.
Eine Regionalzone ist das Gebiet, in dem alle darin befindlichen Schaltuhren aufgrund der für dieses Gebiet gemittelten geographischen Position gleiche Auf-/Untgangszeiten, z. B. der Sonne berechnen. Die Größe der Regionalzone hängt also von der Genauigkeit der geographischen Ortbestimmung ab.
Bezogen auf den Längengrad beträgt die Abweichung 24 h / 360 Grad = 4 min / Grad. D. h. bei 1 Längengrad Auflösung beträgt innerhalb der Regionalzone die längenbezogene Abweichung der Auf-/Untergangszeiten bezogen auf den tatsächlichen Standort maximal +/- 2 min. Bezogen auf den Breitengrad sind die Verhältnisse deutlich ungünstiger, da die Abweichung mit zunehmender Breite ansteigt und zusätzlich von der Jahreszeit abhängig ist. Für eine Änderung des Standortes von 60° Nord auf 61° Nord beträgt am 21. Dezember die breitenbezogene Abweichung der Auf-/Untergangszeit der Sonne ca 10 min / Grad. Für eine Änderung des Standorts in der Nähe des Nord-Polarkreis von 66° Nord auf 67° Nord beträgt am 21. Dezember die breitenbezogene Abweichung der Auf-/Untergangszeit der Sonne ca. 38 min / Grad. Entsprechendes gilt auf der Südhalbkugel am 21 Juni.

Die Schaltuhr Selekta Top 170 0 002 der Fa. Theben besitzt zusätzlich eine Koordinateneingabe in der Form, dass es dem Anwender neben der reinen Zifferneingabe auch möglich ist, über eine Menüliste manuell ein Land und eine Stadt in dem entsprechenden Land auszuwählen, die dem Standort des Anwenders am nächsten liegt. Die Uhr übernimmt in diesem Fall die für die ausgewählte Stadt im Speicher hinterlegten geographischen Koordinaten. Auch diese indirekte Methode ist nicht ganz befriedigend weil auch diese Parametrierung manuell erfolgen muss, und weil in der Regel aus Speicherplatzgründen nur Großstädte auswählbar sind, und weil für genaue Eingaben außerhalb dieser Städte der Anwender die Koordinaten immer noch wissen und als Ziffern eingeben muss. Zudem lassen sich Großstädte wegen ihrer Ausdehnung oft nicht einem bestimmten Breiten- oder Längengrad eindeutig zuordnen. In allen geschilderten Fällen sind bei Inbetriebnahme manuelle Eingaben erforderlich, wobei entweder direkt oder indirekt die geographischen Koordinaten, Zeitzonen und Sommerzeitumschaltdaten eingegeben werden.

Schaltuhren werden häufig in Beleuchtungssteuerungen eingesetzt. In regional ausgedehnten Beleuchtungsanlagen, z. B. Straßen- oder Autobahnbeicuchtungen besteht häufig der Wunsch, dass die Schaltaktionen nahezu zeitglcich ausgeführt werden. Ein Nachteil von bekannten Schaltuhren besteht darin, dass die verwendeten Quarzoszillatoren Toleranzen ausweisen, die dazu führen, dass verschiedene Uhren innerhalb dergleichen Regionalzone, bereits relativ kurze Zeit nach der Inbetriebnahme nicht mehr synchron laufen, was sich dadurch bemerkbar macht, dass ursprünglich gleiche Schaltzeitpunkte langsam auseinanderdriflen. Dieser Effekt lässt sich dadurch kompensieren, dass man die Uhrzeit beispielsweise über Zeitzeichensender wie DCF 77 synchronisiert, wobei diese Methode wegen der begrenzten Senderreichweite jedoch nicht für einen weltweiten Einsatz der Uhr tauglich ist und auch regional Empfangslöcher dort eine Nutzung unmöglich machen.
Weiterhin ist in der DE 43 13 945 Al ein System bekannt, das mit einem Satelliten arbeitet, der niedrig fliegend und mit wesentlich geringeren Frequenzen Zeitsignale sendend die Erde umkreist, so dass dessen Sendesignale auch in Gebäuden und Tunneln zu empfangen sind.
In der DE 197 42 100 Al ist i. e. angegeben, wie aus den zuvor geschilderten Signalen des niedrig fliegenden Satelliten, z. B. mit einem Empfänger in einer Armbanduhr, in einem Bereich der Erdoberfläche von +/- 70 bis +/- 80 Breitengraden eine Synchronisation der Uhr erfolgen kann. Zudem ist beschrieben, wie aus der Veränderung der Dopplerverschiebung der empfangenen Signale ein Empfängerstandort mit einer beschränkten Genauigkeit ermittelt werden kann. Außer der Auswertung des Dopplereffektes der Empfangssignale wird die Auswirkung einer periodischen Verschwenkung der Sendekeule genutzt, um Ortsinformationen daraus abzuleiten. Als Anwendungsfeld des Systems sind Armbanduhreinstellungen angegeben.

Es ist Aufgabe der Erfindung, eine astronomische Schaltuhr anzugeben, welche die aktuelle lokale Zeit und Ihre eigene geographische Position auf der Erdoberfläche ohne jegliche manuelle Parametrierung und ohne die Benutzung einer externen Antenne automatisch ermittelt, und mittels dieser Daten Schaltungen in Abhängigkeit der Auf-/Untergangszeiten von Gestirnen ausführt, wobei die Schaltzeitpunkte mehrerer Schaltuhren in dergleichen Regionalzone langfristig nahezu synchron sein sollen, und die die ortsbezogenen Auf-/Untergangszeiten mit einer höheren Genauigkeit berechnet im Vergleich zu einer herkömmlichen astronomischen Schaltuhrcn mit manueller Ortskoordinateneingabe.

Die Lösung der Aufgabe besteht darin, dass in der Schaltuhr ein Empfänger enthalten ist, der mindestens einmal täglich Zeit- und Ortsinformationen von nur einem sich mit großer Bahnneigung in einem niedrigen Orbit bewegenden Satelliten aufnimmt und die Schaltuhr aus diesen Informationen den Empfängerstandort mit einer Auflösung kleiner als 0,5 Grad Länge und Breite bestimmt und die Uhr so synchronisiert, dass sie eine Langzeittoleranz von höchstens +/- 0,5 s aufweist.

Vorteilhafte Ausgestaltungen sind in den Unteransprüchen beschrieben.

Ein Vorteil der erfindungsgemäß ausgeführten astronomischen Schaltuhr besteht darin, dass auf manuelle Prozeduren zur Eingabe der Uhrzeit, des Datums, der Sommerzeitumschaltung, der geographischen. Koordinaten und der Zeitzone völlig verzichtet werden kann, als auch die Zuführung von extern empfangenen GPS-Signalen entfällt, weil die Parametrierung der Schaltuhr hinsichtlich dieser Daten täglich vollautomatisch durch einen internen Empfänger eines Satellitensignals für Uhrensynchronisation erfolgt und die Zeitpunkte bestimmter Gestimspositionen und die daraus abgeleiteten Schaltzeiten auf Basis dieser Daten mit ausreichender Genauigkeit intern errechnet werden. Dadurch werden alle potentiellen Fehlerquellen bei der Inbetriebnahme einer solchen Schaltuhr vermieden.

Vorteilhaft werden die auf der Nutzung des Dopplereffektes und der periodisch verschwenkenden Sendekeule beruhenden Standortbestimmungen während der täglich aufcinanderfolgenden Satellitenpassagen dazu genutzt, die Genauigkeit durch eine Mittelung zu erhöhen und die Standortkoordinaten möglichst präzise für die weiteren Gestimpositionsberechnungen bereitzustellen. Jeweils nach einer erneuten Inbetriebnahme der Schaltuhr beginnt eine neue Ortsbestimmung, sobald das Empfangssignal eintrifft.

Vorteilhaft wird weiterhin eine Datumsinformation aus den Satclliteninformationen übernommen, und mit dieser werden entsprechend der Zeitglcichung die wahre Ortszeit ermittelt, und in Relation zu dieser die Gestirnspositionen und davon abhängig die Schaltzeiten berechnet.

Bei einer Änderung der geografischen Position oder der lokalen Zeit der Schaltuhr wird diese Änderung von der Uhr automatisch erkannt, und die davon abhängigen Gestimspositionen und Schaltzeiten werden neu berechnet.

Die berechneten Zeitpunkte der Gestimspositionen entsprechen beispielsweise den Aufgangs-/ Kulminations- und Untergangspositionen und beliebigen Zwischenpositionen der Gestirne. Solche Gestirnspositionen sind beispielsweise der Sonnenauf- oder -untergang oder auch die Position des Mondes. Sie werden für die Berechnung der Schaltzeitpunkte genutzt. Der Sonnenuntergang ist für ausgedehnte Beleuchtungsanlagen wichtig, damit alle Lampen in etwa gleichzeitig eingeschaltet werden. Dämmerungsschalter sind zu ungenau und werden durch das Wetter beeinflusst.
Eine Tabelle mit Regionalzonen ist vorteilhafterweise in der Schaltuhr hinterlegt. Solche Regionalzonen können etwa Gebiete von 0,5 Längen- und 0,5 Breitengraden sein oder rechteckige Gebiete, die sich dem Verlauf der Zeitzonengrenzen annähern. Damit wird die Regionalzone, d.h. das Gebiet, in dem alle darin befindlichen Schaltuhren für eine bestimmte Position eines Gestirns den gleichen Zeitpunkt errechnen, kleiner als bei den herkömmlichen astronomischen Schaltuhren. Durch die Synchronisation der Schaltuhren mit den ausgestrahlten Zeitsignalen und durch genaue Berechnungsformeln für die Gestimspositionen wird erreicht, dass die Schaltzeitpunkte verschiedener Schaltuhren innerhalb einer Regionalzone nicht mehr als +/- 0,5 s voneinander abweichen.

Es ist nun in vielen Fällen günstig, nicht den Zeitpunkt der Gestimsposition als Schaltzeitpunkt zu wählen, sondern eine feste Differenz dazu. So spart es Strom, eine Beleuchtungsanlage erst 20 Minuten nach Sonnenuntergang einzuschalten, da vorher noch genügend Licht aus der Dämrnerung vorhanden ist.

In einer anderen Ausführungsform ist es vorteilhaft, die Differenz des Schaltzeitpunktes zu dem Zeitpunkt der Gestimsposition einstellbar zu machen.

Die Schaltuhr wird noch flexibler einsetzbar, wenn weitere Schaltzeitpunkte mit einem festen Bezug zur lokalen Zeit und zum Wochentag unter Hilfe von Bedienelementen programmierbar sind. So kann etwa eine Beleuchtungsanlage jeweils wochentags nachts um 2:00 Uhr ausgeschaltet werden und am Sonntag bis zum Sonnenaufgang eingeschaltet sein.

Die genannten Bedienelemente sind rein optional. Es kann auch völlig auf Eingabeelemete, wie z. B. Tasten, und Anzeigeelemente, wie z. B. Flüssigkristallanzeigen, verzichtet werden. So lassen sich niedrige Herstellkosten des Produkts realisieren. Ebenso reduziert sich der Erklärungsbedarf des Produkts, z.B. der Umfang der Bedienungsanleitung erheblich.

Ausführungsformen der Erfindung sind in den Figuren beispielhaft beschrieben.
Fig. 1 zeigt ein Blockschaltbild einer Schaltuhr;
Fig. 2a, b, c zeigt eine einfache Einstellung mit Sonnenauf- und ―untergangszeiten;
Fig. 3a, b zeigt eine Parametrierung mit Tasten und Anzeige.

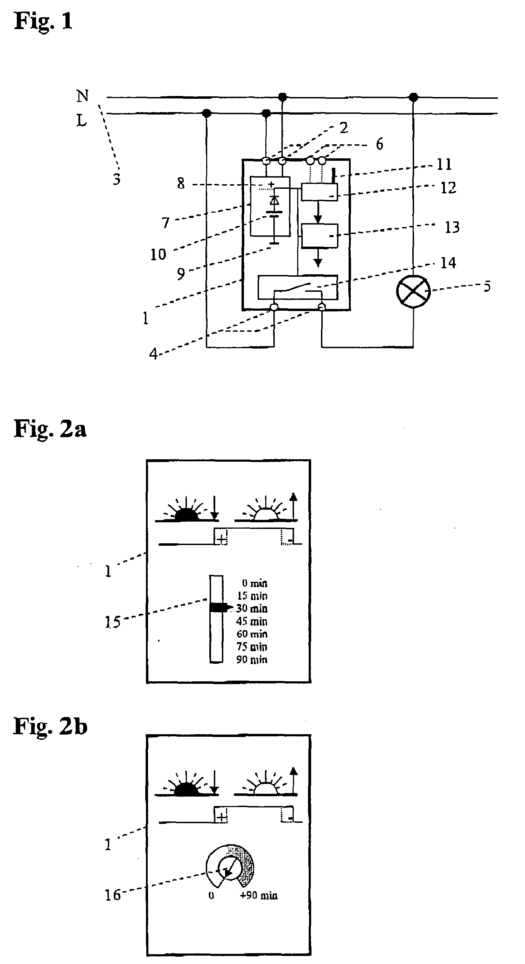

Fig. 1 zeigt das Blockschaltbild einer astronomische Schaltuhr 1 in einfachster Ausführung, welche in einem Gehäuse untergebracht ist und weder Anzeigeelemente noch Bedienelemente besitzt, sondern lediglich Eingangsklemmen 2 zum Anschluss an das Versorgungsnetz 3 sowie Ausgangsklemmen 4 zum Anschluss einer elektrischen Last 5, und ggf. Anschlussklemmen 6 für den Anschluss einer externen Empfangsantenne. Das Netzteil 7 wandelt die Netzspannung in eine niedrige Gleichspannung 8 mit dem Bezugspunkt 9 und versorgt die elektronischen Komponenten sowie das Schaltglied. Zur Überbrückung von Zeiträumen, in denen die Schaltuhr nicht an das Versorgungsnetz angeschlossen ist oder das Versorgungsnetz ausfällt, ist die Schaltuhr mit einer internen Stromquelle 10 ausgerüstet. Aus dem durch die integrierte Empfangsantenne 11 aufgenommenen Signal des Zeitzeichensenders wird durch den Empfänger 12 die Information über die lokale Zeit und den geographischen Standort dekodiert und ausgewertet. Das Berechnungs- und Steuerungsmodul 13 berechnet auf Basis dieser Auswertung beispielsweise die Auf-/Untergangszeiten eines Gestirns - z. B. der Sonne ― und schaltet bei Gleichheit der errechneten Zeiten mit der aktuellen lokalen Zeit ein Schaltglied 14 und damit eine Last 5 entweder ein oder aus. Optional kann eine feste Schaltzeitverschiebung im Berechnungs- und Steuerungsmodul gespeichert sein, die dazu führt, dass die Schaltungen beispielsweise immer mit einer zeitlichen Differenz von z.B. 30 Minuten nach dem errechneten Sonnenuntergang und 30 Minuten vor dem errechneten Sonnenaufgang, ausgeführt werden. Empfangsteil und Berechnungs- und Steuerungsmodul können wahlweise entweder elektronisch separat ausgeführt sein oder auf einem gemeinsamen Mikrocontroller zusammengefasst sein.
Der Schaltzustand des Schaltrelais kann z.B. mittels einer LED signalisiert werden.
Mit der in Fig. 1 dargestellten Anordnung ist eine astronomische Schaltuhr realisiert, die beispielsweise bei Sonnenuntergang eine Beleuchtung einschaltet und bei Sonnenaufgang wieder ausschaltet, ggf. unter Einbeziehung einer festen Schaltzeitverschiebung Der besondere Vorteil dieser Anordnung besteht darin dass der Anwender lediglich die Installation, d. h. die äußere Beschaltung des Gerätes durchzufiühren hat. Es sind keine weiteren manuellen Dateneingaben nötig. Das Gerät parametriert sich selbständig und nimmt nach der Installation den automatischen Schaltbetrieb auf.

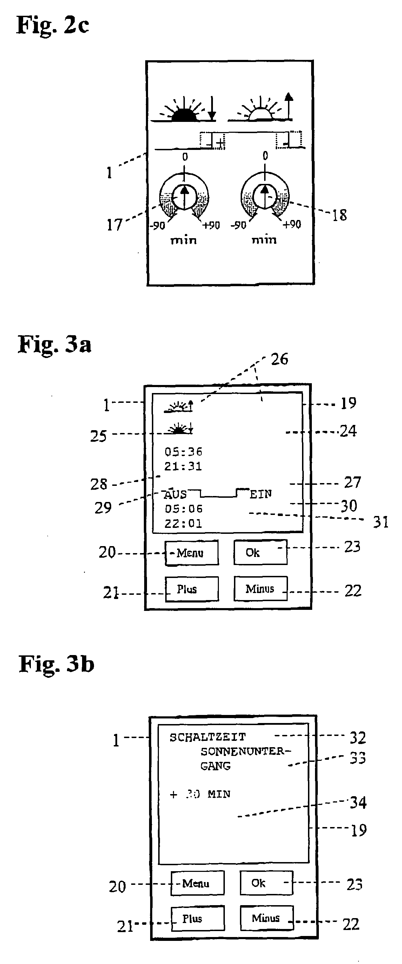

In den Figuren 2 a, 2 b, 2 c ist die individuelle Einstellbarkeit der Schaltzeitverschiebung vorgesehen. Dadurch wird eine Anpassung der Schaltzeitpunkte an das individuelle Dämmerungsempfinden möglich.
Als Einstellelemente können alle üblichen Lösungsmittel, wie z.B. Tasten, Potentiometer, Dreh-/ Schiebeschalter etc., eingesetzt werden. Die Einstellung kann sowohl stufenlos, - z. B. 0 min bis +/-90 min -, als auch in festen Zeitstufen, z. B. 0 min, 15 min, 30 min, 45 min vorgesehen sein.

In den Figuren 2 a, 2 b, 2 c wurde vereinfachend die äußere Beschaltung nicht dargestellt, sondern es werden lediglich die frontseitigen Bedienelemente gezeigt.

Fig. 2 a zeigt eine Variante, in der ein einziges Bedienelement für die Einstellung der Schaltzeitverschiebung als Schieberastschalter 15 ausgeführt ist. Die Schaltzeitverschiebung lässt sich in dieser Variante nur in festen Stufen, z. B. 0 min, 15 min, 30 min, auswählen, und wird durch das Berechnungs- und Steuerungsmodul vorzugsweise zum errechneten Sonnen-Untergangszeitpunkt addiert und vom errechneten Sonnen-Aufgangszeitpunkt subtrahiert.

Fig. 2 b zeigt eine Variante, die vereinfachend nur ein einziges drehbares Bedienelement 16 mit einer Einstellmöglichkeit von z. B. 0 Minuten, bis 90 Minuten aufweist, wobei die Schaltzeitverschiebung durch das Berechnungs- und Steuerungsmodul vorzugsweise zum errechneten Sonnen-Untergangszeitpunkt addiert und vom errechneten Sonnen-Aufgangszeitpunkt subtrahiert wird.

Fig. 2 c zeigt eine Variante der astronomischen Schaltuhr, bei der die Schaltpunktverschiebungen, z. **B.** 0 bis +/-90 Minuten, separat über zwei getrennte drehbare Bedienelemente 17, 18 für den Sonnen-Untergangszeitpunkt und den Sonnen-Aufgangszeitpunkt einstellbar sind.

In den Fig. 3a, 3b ist die automatische Parametrierung der Schaltuhr mit einer zusätzlichen Möglichkeit der Programmierung durch den Anwender dargestellt. Über Eingabeelemente, z. B. Tasten, und ein Anzeigeelement, z. **B.** eine Flüssigkristallanzeige, ist es möglich das Berechnungs- und Steuerungsmodul so zu programmieren, dass abgesehen von den automatisch berechneten Schaltzeiten, welche bestimmten Gestirnspositionen entsprechen, weitere vom Anwender bestimmbare Einschaltzeiten und Ausschaltzeiten mit einem festen Bezug zur lokalen Zeit gespeichert werden. Ebenfalls besteht die Möglichkeit, die automatisch berechneten gestirnsbezogenen Schaltzeiten an wählbaren Wochentagen zu deaktivieren. Darüber hinaus lassen sich übliche Schaltuhrfunktionen, wie z. B. Dauer Ein, Dauer Aus, Automatikbetrieb, Ferienprogramm etc., extern einstellen. Der Anwender einer solchen Schaltuhr braucht nur noch diejenigen Eingaben vorzunehmen, die sich auf das anwenderspezifische Schaliprogramm beziehen, er ist aber frei von der eigentlichen Parametrierung der Schaltuhr bezüglich der lokalen Uhrzeit, des Sommerzeitumschaltdatums, der geographische Koordinaten des Standorts und der Zeitzone.

Die Fig. 3a zeigt beispielhaft die Bedienelemente und das Anzeigeelement einer derartigen astronomischen Schaltuhr. Das Anzeigeelement 19 ist vorzugsweise in Form einer Flüssigkristall-Matrix Anzeige ausgeführt. Die Darstellungen im Anzeigeelement sind beispielhaft für eine standardmäßige Betriebsanzeige gewählt. Es sind z. B. die errechnete Untergangszeit 24 und die errechnete Aufgangszeit 25 der Sonne mit entsprechend zugeordneten Symbolen 26 dargestellt. Weiterhin sind die tatsächliche Einschaltzeit 27 und die tatsächliche Ausschaltzeit 28 also unter Berücksichtigung der Schaltzeitverschiebungen dargestellt. Ebenfalls dargestellt sind der Wochentag 29, das Datum 30 und die aktuelle Zeit 31.

Die Programmierung erfolgt vorzugsweise über ein Textauswahlmenü, wobei die Sprache vorzugsweise durch den Anwender wählbar ist.
Über die Menütaste 20 wird ausgehend von der standardmäßigen Betriebsanzeige das Auswahlmenü aufgerufen und auch wieder geschlossen. Mit den Tasten Plus 21 und Minus 22 bewegt man sich innerhalb des Menüs von Auswahlpunkt zu Auswahlpunkt vorwärts bzw. rückwärts. Die Taste OK 23 bestätigt einen ausgewählten Menüpunkt und leitet über zur nächsten Untermenüanzeige oder ggf. zur direkten Werteingabe. Eingabewerte, z. B. eine Schaltzeitverschiebung, werden direkt mittels der Plus- oder Minustasten geändert, indem die entsprechenden Ziffern in der Anzeige inkrementiert bzw. dekrementiert werden, und anschließend mittels der OK-Taste gespeichert werden.

Fig. 3 b zeigt beispielhaft den aufgerufenen. Menüpunkt "Schaltzeit" 32 mit dem ebenfalls ausgewählten Untermenüpunkt "Sonnenuntergang" 33 und der Eingabezeile für die beispielhaft eingegebene Schaltzeitverschiebung "+ 30 MIN" 34.

### Bezugszeichenliste

- 1: Astronomische Schaltuhr
- 2: Eingangsklemmen zum Anschluss an das Versorgungsnetz
- 3: Versorgungsnetz
- 4: Ausgangsklemmen zum Anschluss einer elektrischen Last
- 5: Elektrische Last
- 6: Anschlussklemmen zum Anschluss einer externen Empfangsantenne
- 7: Netzteil
- 8: Gleichspannung +
- 9: Gleichspannung Bezugspotential
- 10: Interne Stromquelle
- 11: Integrierte Empfangsantenne
- 12: Empfangsteil
- 13: Berechnungs- und Steuerungsmodul mit Zeitgeber
- 14: Schaltglied
- 15: Bedienelement Schieberastschalter
- 16: Bedienelement drehbar
- 17: Bedienelement für Schaltzeitverschiebung Sonnenuntergang
- 18: Bedienelement für Schaltzeitverschicbung Sonnenaufgang
- 19: Anzeigeelement
- 20: Taste Menü
- 21: Taste Plus
- 22: Taste Minus
- 23: Taste Ok
- 24: Errechnete Sonnenuntergangszeit
- 25: Errechnete Sormenaufgangszeit
- 26: Symbole Sonnenaufgang / Sonnenuntergang
- 27: Tatsächliche Einschaltzeit
- 28: Tatsächliche Ausschaltzeit
- 29: Wochentag
- 30: Datum
- 31: Aktuelle Uhrzeit
- 32: Menupunkt "Schaltzeit"
- 33: Untermenüpunkt "Sonnenuntergang"
- 34: Eingabezeile für Schaltzeitverschiebung

## Patentansprüche

1. Astronomische Schaltuhr (1) zum Ein- und Ausschalten von Verbrauchern in jeweils vorgegebener zeitlicher Relation zu einer ortsbezogenen Position mindestens eines ausgewählten Gestims, wie Sonne und/oder Mond, wobei aus von Satelliten empfangenen Zeit-, Satelliten- und Ortsinformationen eine geografische Empfängerposition und periodisch eine Uhrzeit ermittelt werden, womit in der Schaltuhr (1) eine mit einem internen Zeitgeber (13) gesteuerte Uhr synchronisiert und eine mittlere Ortszeit und die Position des ausgewählten Gestirns errechnet wird, **dadurch gekennzeichnet, dass** in der Schaltuhr (1) ein Empfänger enthalten ist, der mindestens einmal täglich Zeit- und Ortsinformationen von nur einem sich mit großer Bahnneigung in einem niedrigen Orbit bewegenden Satelliten aufnimmt und die Schalluhr (1) aus diesen Informationen den Empfangerstandort mit einer Auflösung kleiner als 0,5 Grad Länge und Breite bestimmt und die Uhr so synchronisiert, dass sie eine Langzeittoleranz von höchstens +/- 0,5 s aufweist.

2. Astronomische Schaltuhr nach Anspruch 1, **dadurch gekennzeichnet, dass** die Bestimmung der Koordinaten des Empfängerstandortes bei jeder Passage des Satelliten emcut vorgenommen wird und die aufeinander folgenden Empfängerstandortkoordinaten gemittelt werden und die Mittelwerte zu den weiteren Berechnungen genutzt werden.

3. Astronomische Schaltuhr nach Anspruch 1 oder 2, **dadurch gekennzeichnet, dass** aus der empfangenen Zeitinformation ein Datum gewonnen wird, das zur Berechnung der wahren Ortszeit mittels der Zeitgleichung genutzt wird, die der Berechnung der jeweiligen Gestirnsposition dient.

4. Astronomische Schaltuhr nach einem der Ansprüche 1 bis 3, **dadurch gekennzeichnet, dass** die Zeitpunkte bestimmter Gestirnspositionen und davon abhängige Schaltzeitpunkte des Ein- und Ausschaltens neu berechnet werden, sobald die Schaltuhr in B-etrieb genommen wird oder eine signifikante Änderung der geographischen Position der Schaltuhr oder der lokalen Zeit erkannt wird.

5. Astronomische Schaltuhr nach Anspruch 4, **dadurch gekennzeichnet, dass** die berechneten Zeitpunkte der Gestimspositionen den Aufgangs-/ Kulminatious- und Untergangspositionen und/oder beliebigen Zwischenpositionen der Gestirne entsprechen.

6. Astronomische Schaltuhr nach Anspruch 5, **dadurch gekennzeichnet, dass** die Schaltzeitpunkte eine feste zeitliche Differenz zu den errechneten Zeitpunkten der Gestirnspositionen aufweisen.

7. Astronomische Schaltuhr nach Anspruch 5, **dadurch gekennzeichnet, dass** die Schaltzeitpunkte eine einstellbare zeitliche Differenz zu den errechneten Zeitpunkten der Gestimspositionen aufweisen.

8. Astronomische Schaltuhr nach Anspruch 5, **dadurch gekennzeichnet, dass** weitere . Schaltzeitpunkte mit einem festen Bezug zur lokalen Zeit und zum Wochentag mittels Bedienelementen programmierbar sind.

9. Astronomische Schaltuhr nach Anspruch 5, **dadurch gekennzeichnet, dass** Schaltvorgänge, die sich auf berechnete Zeitpunkte bestimmter Gestirnspositionen beziehen, mittels Bedienmitteln einzeln für jeden Wochentag aktivierbar und deaktivierbar sind.

10. Astronomische Schaltuhr nach einem der Ansprüche 1 bis 6, **dadurch gekennzeichnet, dass** die Schaltuhr lediglich Anschlüsse zur Stromversorgung (2) und für Schaltglieder (4) zum Schalten elektrischer Lasten (5) jedoch keine Bedienelemente aufweist.

11. Astronomische Schaltuhr nach Anspruch 7, **dadurch gekennzeichnet, dass** sie einen extern bedienbaren Schiebeschalter (15) mit mehreren Schaltstellungen aufweist, mit denen jeweils ein bestimmtes Zeitintervall einer Vorverlegung des Ausschaltzeitpunktes bei Sonnenaufgang und einer Verzögerung des Einschaltzeitpunktes dem Steuermodul (13) bei Sonnenuntergang vorgegeben wird.

12. Astronomische Schaltuhr nach Anspruch 7, **dadurch gekennzeichnet, dass** sie ein extern bedienbares Potentiometer (16) trägt, mit dem dem Steuermodul (13) stellungsabhängig ein Zeitintervall vorgegeben wird, um den jeweils der Ausschaltzeitpunkt bei Sonnenaufgang vorverlegt und ein Einschaltzeitpunk bei Sonnenuntergang verzögert wird.

13. Astronomische Schaltulu nach Anspruch 7, **dadurch gekennzeichnet, dass** ein Potentiometer (17) trägt, mit dem stellungsabhängig eine relative Verschiebung des Einschaltzeitpunktes zum Sonnenuntergang dem Steuermodul. (13) vorgegeben wird, und ein zweites Potentiorneler (18) enthält, mit dem stellungsabhängig eine relative Verschiebung des Ausschaltzeitpunktes zum Sonnenaufgang vorgegeben wird.

14. Astronomische Schaltuhr nach einem der Ansprüche 7 bis 9, **dadurch** gelcennzeichnet, dass sie ein LCD-Display (19) und Menü-Tasten (20 ― 23) trägt, die mit dem Steuermodul (13) verbunden sind, und mit denen das Gestirn auszuwählen ist und/oder die zeitliche Relation zu einer Gestimsposition für die jeweiligen Schaltzeitpunkte und/oder weitere zeitbezogene und/oder wochentagbezogene Schaltzeitpunkte eingegeben und angezeigt werden.
